# FASCICULE DE BREVET EUROPEEN

(11) **EP 3 956 132 B1**
(45) Date de publication et mention de la délivrance du brevet: **15.03.2023**
(21) Numéro de dépôt: 20712390.2
(22) Date de dépôt: 25.03.2020
(51) Int. Cl.: B29C 73/34, B23K 26/53, B29C 35/08, B23P 6/04

(54) **PROCEDE DE TRAITEMENT D'UN DEFAUT INTERNE D'UNE PIECE**
VERFAHREN ZUR BEHANDLUNG EINES INTERNEN FEHLERS BEI EINEM TEIL
METHOD FOR TREATING AN INTERNAL DEFECT IN A PART

(30) Priorité: 16.04.2019 FR 1904036
(43) Date de publication de la demande: 23.02.2022
(73) Titulaire: SAFRAN AIRCRAFT ENGINES, 75015 Paris (FR)
(72) Inventeur: SISTACH, Hugo, 77550 MOISSY-CRAMAYEL (FR); PIETTE, Romaric, Jean-Marie, 77550 MOISSY-CRAMAYEL (FR)
(74) Mandataire: Brevalex
(86) Numéro de dépôt international: PCT/EP2020/058403
(87) Numéro de publication internationale: WO 2020/212104

(56) Documents cités:
- EP-A1- 2 881 246
- US-A1- 2012 138 223
- US-A1- 2017 028 505

## Description

### DOMAINE TECHNIQUE

La présente invention concerne un procédé de traitement d'un défaut dans une pièce, permettant de réparer ce défaut.

### ÉTAT DE LA TECHNIQUE ANTÉRIEURE

Lors de la fabrication de pièces, il peut arriver qu'un défaut interne (porosité, manque de fusion, criques ou fissures, etc.) apparaisse dans la pièce, que ce soit pour des pièces fabriqués avec des procédés standards comme la fonderie ou avec des procédés plus récents comme la fabrication additive sur lit de poudre.

Or la présence d'un tel défaut interne peut, dans certains domaines comme notamment dans l'aéronautique, être inacceptable puisqu'elle peut réduire la résistance à la fatigue et provoquer la défaillance de la pièce plus tôt que prévu. Une telle pièce, si elle n'est pas réparée, est donc mise au rebus.

La présence de ce type de défaut interne est en général détectée en réalisant un contrôle non destructif de la pièce (par rayons X, tomographie, microtomographie, etc.). Ces défauts peuvent aussi être détectés au cours de la fabrication de la pièce via un contrôle du procédé en cours de fabrication (connu sous le terme anglais de « control in process »), comme par exemple une microtomographie, l'application de rayons X en cours de fabrication, un suivi du bain de fusion, etc. À titre d'exemple, en fusion laser sur lit de poudre, on est capable de remonter aux défauts potentiels après fabrication via l'observation du bain de fusion en fabrication.

L'invention a notamment pour but de corriger de tels défauts internes au coeur même de la pièce.

Le document EP 2 881 246 A1 décrit un procédé de traitement d'un défaut interne d'une pièce en un matériau au moyen d'un faisceau laser.

### EXPOSÉ DE L'INVENTION

À cet effet, l'invention propose un procédé de traitement d'un défaut interne d'une pièce en un matériau, le procédé comprenant les étapes de :
a) détection et localisation du défaut interne dans la pièce ;
b) définition, à l'intérieur de la pièce, d'au moins un volume cible incluant au moins partiellement le défaut ;
c) pour chaque volume cible, irradiation simultanée du volume cible par au moins deux faisceaux qui sont concourants dans le volume cible et qui sont continus, moyennant quoi on obtient une zone traitée ;

dans lequel l'énergie déposée dans le volume cible par chaque faisceau est inférieure à une énergie seuil de frittage du matériau, et la somme des énergies déposées dans le volume cible par chacun des faisceaux est supérieure ou égale à une énergie seuil de transformation, l'énergie seuil de transformation correspondant à l'énergie seuil de frittage du matériau, lorsqu'on souhaite obtenir un frittage sélectif du matériau dans le volume cible, ou à l'énergie seuil de fusion du matériau, lorsqu'on souhaite obtenir une fusion sélective du matériau dans le volume cible,
et dans lequel le matériau de la pièce est partiellement transparent auxdits au moins deux faisceaux.

Selon une première variante, l'étape b) définissant plusieurs volumes cibles, les volumes cibles sont irradiés simultanément à l'étape c).

Selon une deuxième variante, l'étape b) définissant plusieurs volumes cibles, les volumes cibles sont irradiés successivement à l'étape c).

Selon une variante, l'étape b) consiste en une définition d'un unique volume cible, à l'intérieur de la pièce, incluant entièrement le défaut.

Selon un mode de réalisation de l'invention, le procédé comprend en outre, après l'étape c), une étape de contrôle de la zone traitée de manière à vérifier si le défaut initial a disparu, l'étape de contrôle comprenant une détection d'un éventuel nouveau défaut interne et, dans le cas où un nouveau défaut interne est détecté dans la zone traitée, ce nouveau défaut interne est localisé et les étapes b) et c) sont répétées.

Avantageusement, la détection d'un défaut interne est réalisée par une technique non destructive. Il peut par exemple s'agir d'une technique dite de CND (pour « Contrôle Non Destructif ») comme la tomographie, la microtomographie ou les rayons X.

De préférence, à l'étape c), les au moins deux faisceaux sont focalisés dans le volume cible.

De préférence, les au moins deux faisceaux sont concourants en leur point de focalisation.

Avantageusement, à l'étape c), les au moins deux faisceaux présentent la même énergie surfacique.

Selon un mode de réalisation préféré de l'invention, les au moins deux faisceaux sont au nombre de trois.

De préférence, les au moins deux faisceaux sont des faisceaux énergétiques de même nature et sont choisis parmi les faisceaux laser, les faisceaux micro-ondes, les faisceaux UV et les faisceaux IR.

Le procédé selon l'invention permet de traiter des défauts dont la plus grande dimension peut être comprise entre 10 µm et 500 µm. De préférence, chaque volume cible a sa plus grande dimension qui est comprise entre 10 µm et 1 mm. En surdimensionnant le volume cible par rapport au défaut à traiter, cela permet de fusionner ou de fritter la zone située aux alentours du défaut et ainsi d'homogénéiser la matière dans cette zone. A titre d'exemple, si on refond un défaut de type porosité en refondant un volume surdimensionné contenant le défaut et comme la refonte se fait sans apport de matière, cela permet de « diffuser » la porosité en plusieurs petites porosités sur tout le volume refusionné.

Dans le présent exposé, l'expression « compris entre ... et ... » doit être comprise comme incluant les bornes.

Grâce à l'invention, il est possible de réaliser une fusion ou un frittage en trois dimensions dans un volume cible à l'intérieur du volume de la pièce. Il est donc possible, avec ce procédé, de réparer ou de limiter facilement des défauts internes et ponctuels de la pièce, sans apport extérieur de matière, défauts qui ne seraient pas acceptables et qui, en temps normal, auraient conduit au rebutage de la pièce.

### BRÈVE DESCRIPTION DES DESSINS

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1a à 1c illustrent des étapes d'un premier mode de réalisation du procédé de traitement selon l'invention ;
- les figures 2a à 2d illustrent des étapes d'un second mode de réalisation du procédé de traitement selon l'invention.

### EXPOSÉ DÉTAILLÉ DE MODES DE RÉALISATION PARTICULIERS

Conformément à l'invention, on utilise au moins deux faisceaux, de préférence trois faisceaux, afin d'irradier simultanément un volume cible d'une pièce endommagée, afin de traiter (en l'occurrence réparer) un défaut interne.

Les faisceaux sont continus.

La pièce à traiter peut être en un matériau métallique (métal ou alliage), céramique ou polymère.

Le choix du type de faisceau à utiliser est effectué en fonction de l'énergie qu'il faut déposer dans le volume cible afin que le matériau dudit volume cible fusionne ou se fritte, faisant ainsi disparaître le défaut. Cela dépend donc du matériau, mais aussi si l'on souhaite obtenir un frittage ou une fusion du matériau. Si l'on souhaite obtenir un frittage du matériau, la somme des énergies déposées par chacun des faisceaux dans le volume cible, lorsqu'ils irradient simultanément ce volume cible en y étant concourants, doit être supérieure ou égale à une énergie seuil nécessaire au frittage. Si l'on souhaite obtenir une fusion du matériau, la sommes de ces énergies dans le volume cible devra être supérieure ou égale à une énergie seuil nécessaire à la fusion.

Il faut également que le matériau de la pièce soit partiellement transparent aux faisceaux choisis. On considère qu'un matériau est partiellement transparent à un faisceau dès lors qu'il absorbe jusqu'à 60% du faisceau (la valeur 0% étant exclue).

De préférence, on choisira des faisceaux énergétiques de même nature.

Les faisceaux peuvent être produits par une même source, dont le faisceau est divisé en autant de faisceaux nécessaires, ou par des sources distinctes.

À titre d'exemple, on peut utiliser des faisceaux de micro-ondes pour réaliser la fusion d'un volume cible dans une pièce métallique en un alliage à base de nickel (par exemple de type Inconel^{™} 718) ou en un alliage de titane (par exemple TA6V), de manière à obtenir une puissance totale comprise entre 200 et 400 W et/ou une énergie linéique comprise entre 0,01 J/mm et 1 J/mm. Par exemple, pour obtenir une puissance de 200 W, on peut utiliser deux faisceaux de 100 W. On peut ainsi réaliser des aubes de compresseur, par exemple.

Pour fusionner un volume cible d'une pièce en polymère thermodurcissable, par exemple d'une résine époxyde, servant à la fabrication de panneaux acoustiques ou de pièces d'habillage moteur (éléments d'amortissement par exemple), on peut utiliser des faisceaux UV avec une puissance comprise entre 60 et 100 W et/ou une énergie surfacique comprise entre 0,001 et 0,05 J/mm², ou des faisceaux laser avec une puissance comprise entre 20 et 40 W et/ou une énergie surfacique comprise entre 0,005 et 0,025 J/mm².

La détection et la localisation du défaut doivent être suffisamment précises pour que l'on puisse déterminer, en fonction de la forme et de la trajectoire du défaut, où définir le ou les volumes cibles (en d'autres termes, où diriger les faisceaux dans le ou les volumes cibles) dans lesquels le matériau est destiné à fusionner ou à être fritter.

Les types de défauts visés ont de préférence leur plus grande dimension qui est entre 10 µm et 500 µm (borne incluses). Il peut par exemple s'agir d'une fissure. On cherche alors une précision de détection et de localisation à ± 10 µm, précision apportée par la microtomographie.

Avantageusement, on peut avoir, après l'étape c) (qui est en fait une étape de réparation du défaut), une autre étape de détection permettant de vérifier que le défaut a bien été traité et réparé. Si le défaut est toujours présent, on peut alors localiser ce défaut et refaire les étapes b) de définition d'au moins un volume cible et c) d'irradiation simultanée de ce ou ces volumes cibles et ainsi de suite jusqu'à la disparition du défaut.

Certains défauts remplis de vide et n'ayant pas assez de matière peuvent s'avérer difficile à traiter avec ce procédé et peuvent nécessiter plusieurs étapes de réparation (c'est-à-dire plusieurs répétition de la suite d'étapes b) et c)) avec un déplacement du ou des volumes cibles vers une surface externe de la pièce, où on pourra alors réparer le défaut, déplacé en surface, par un ajout de matière.

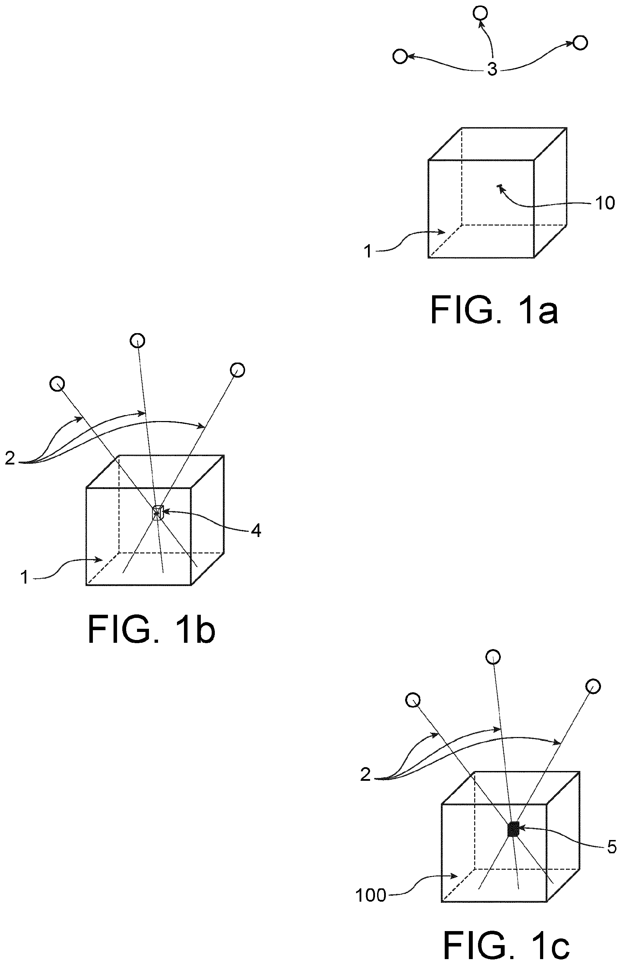

Un premier mode de réalisation du procédé conformément à l'invention est illustré dans les figures 1a à 1c. Dans la figure 1a, la pièce 1 défectueuse présentant un défaut interne 10 est symbolisée par un cube. Les origines des faisceaux 2 sont représentées par des ronds 3.

Le défaut 10 est détecté et localisé, puis on utilise trois faisceaux 2 de même nature pour fusionner ou fritter localement un volume cible 4 de la pièce 1 défectueuse, le volume cible 4 contenant entièrement le défaut 10. On amène ainsi la somme des énergies des trois faisceaux dans une zone locale précise de la pièce où l'on souhaite fusionner le matériau, puisque comme dans le cas d'une triangulation satellite, on peut décrire un point précis de l'espace à partir de trois droites. Dans la figure 1b, les trois faisceaux sont dirigés simultanément vers le volume cible 4, de manière à ce qu'ils soient concourants dans ce volume cible 4. Le volume cible 4 contient le défaut interne 10 et est donc situé à l'intérieur du cube représentant la pièce 1 défectueuse. Le matériau contenu dans le volume cible 4 est chauffé jusqu'à être à l'état fusionné, puis, lorsqu'il est refroidi, il donne un volume cible 5 dans lequel le matériau est fusionné ou fritté, obtenant ainsi une pièce 100 réparée (figure 1c). La zone traitée est ici le volume cible 5 au matériau fusionné ou fritté.

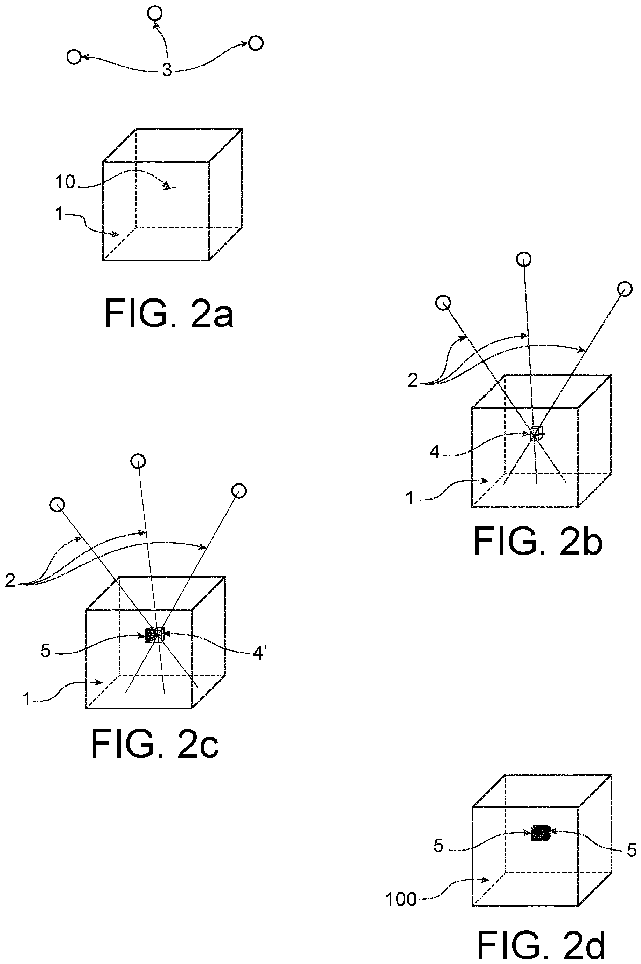

Un second mode de réalisation du procédé conformément à l'invention est illustré dans les figures 2a à 2d. Dans la figure 2a, la pièce 1 défectueuse comporte un défaut interne 10, qui est représenté plus grand que celui de la figure 1a. On définit un premier volume cible 4 contenant une partie du défaut 10 et on le traite en dirigeant simultanément, dans ce premier volume cible 4, trois faisceaux 2 qui sont concourants dans ce premier volume cible 4 (figure 2b). La partie du défaut contenue dans ce premier volume cible va disparaître lorsque le matériau du volume cible 4 va fusionner ou fritter pour devenir le volume cible fusionné ou fritté 5. On va alors traiter l'autre partie du défaut 10 en définissant un deuxième volume cible 4', juxtaposé au premier volume cible 4 (et au volume cible fusionné ou fritté 5). On dirige les trois faisceaux 2 dans ce deuxième volume cible 4' de manière à ce que les trois faisceaux soient concourants dans le deuxième volume cible 4' (figure 2c). Après traitement, la zone traitée de la pièce comporte les deux volumes cibles 5 au matériau fritté ou fusionné et on obtient la pièce réparée 100 (figure 2d).

Bien entendu, les sources des faisceaux sont disposées à distances suffisantes les unes des autres afin de pouvoir s'assurer de traiter avec précision la zone voulue.

Selon une variante préférée de l'invention, chacun des trois faisceaux est configuré pour que l'énergie déposée dans le volume cible soit égal à 1/3 de l'énergie nécessaire pour fusionner ou fritter le matériau contenu dans le volume cible 4 ou 4' visé. Ainsi, la fusion ou le frittage du matériau contenu dans le volume cible n'aura lieu qu'en cas de concentration simultanée des trois faisceaux dans le volume cible, évitant ainsi toute fusion ou frittage non souhaité en cas de mauvais placement des faisceaux.

Le procédé selon l'invention a par exemple été utilisé pour réparer une pièce en polymère résine comprenant un défaut interne ayant les dimensions 250 µm × 100 µm × 50 µm en dirigeant sur le défaut trois faisceaux UV ayant chacun une puissance de 30 W (soit une puissance totale de 90 W) et un diamètre de faisceau de 100 µm au point de convergence avec une vitesse de 2 mm/s.

## Revendications

1. Procédé de traitement d'un défaut interne (10) d'une pièce (1) en un matériau, le procédé comprenant les étapes de :
a) détection et localisation du défaut interne (10) dans la pièce ;
b) définition, à l'intérieur de la pièce, d'au moins un volume cible (4 ; 4') incluant au moins partiellement le défaut ; **caractérisé par** :
c) pour chaque volume cible (4; 4'), irradiation simultanée du volume cible par au moins deux faisceaux (2) qui sont concourants dans le volume cible et qui sont continus, moyennant quoi on obtient une zone traitée ;
dans lequel l'énergie déposée dans le volume cible par chaque faisceau est inférieure à une énergie seuil de frittage du matériau, et la somme des énergies déposées dans le volume cible par chacun des faisceaux est supérieure ou égale à une énergie seuil de transformation, l'énergie seuil de transformation correspondant à l'énergie seuil de frittage du matériau, lorsqu'on souhaite obtenir un frittage sélectif du matériau dans le volume cible, ou à l'énergie seuil de fusion du matériau, lorsqu'on souhaite obtenir une fusion sélective du matériau dans le volume cible,
et dans lequel le matériau de la pièce est partiellement transparent auxdits au moins deux faisceaux.

2. Procédé selon la revendication 1, dans lequel l'étape b) définissant plusieurs volumes cibles, les volumes cibles sont irradiés simultanément à l'étape c).

3. Procédé selon la revendication 1, dans lequel l'étape b) définissant plusieurs volumes cibles, les volumes cibles sont irradiés successivement à l'étape c).

4. Procédé selon la revendication 1, dans lequel l'étape b) consiste en une définition d'un unique volume cible (4), à l'intérieur de la pièce, incluant entièrement le défaut (10).

5. Procédé selon l'une quelconque des revendications 1 à 4, comprenant en outre, après l'étape c), une étape de contrôle de la zone traitée de manière à vérifier si le défaut initial a disparu, l'étape de contrôle comprenant une détection d'un éventuel nouveau défaut interne et, dans le cas où un nouveau défaut interne est détecté dans la zone traitée, ce nouveau défaut interne est localisé et les étapes b) et c) sont répétées.

6. Procédé selon l'une quelconque des revendications 1 à 5, dans lequel la détection d'un défaut interne est réalisée par une technique non destructive.

7. Procédé selon l'une quelconque des revendications 1 à 6, dans lequel, à l'étape c), les au moins deux faisceaux sont focalisés dans le volume cible.

8. Procédé selon la revendication 7, dans lequel les au moins deux faisceaux sont concourants en leur point de focalisation.

9. Procédé selon l'une quelconque des revendications 1 à 8, dans lequel, à l'étape c), les au moins deux faisceaux présentent la même énergie surfacique.

10. Procédé selon l'une quelconque des revendications 1 à 9, dans lequel les au moins deux faisceaux sont au nombre de trois.

11. Procédé selon l'une quelconque des revendications 1 à 10, dans lequel les au moins deux faisceaux sont des faisceaux énergétiques de même nature et sont choisis parmi les faisceaux laser, les faisceaux micro-ondes, les faisceaux UV et les faisceaux IR.

12. Procédé selon l'une quelconque des revendications 1 à 11, dans lequel chaque volume cible a sa plus grande dimension qui est comprise entre 10 µm et 1 mm.

## Patentansprüche

1. Verfahren zur Behandlung eines inneren Fehlers (10) in einem Werkstück (1) aus einem Material, wobei das Verfahren die folgenden Schritte umfasst:
a) Detektieren und Lokalisieren des inneren Fehlers (10) im Werkstück;
b) Definieren mindestens eines Zielvolumens (4; 4') im Inneren des Werkstücks, das den Fehler zumindest teilweise enthält; **gekennzeichnet durch**:
c) für jedes Zielvolumen (4; 4'), gleichzeitiges Bestrahlen des Zielvolumens mit mindestens zwei Strahlen (2), die im Zielvolumen zusammenlaufen und kontinuierlich sind, wodurch ein behandelter Bereich erhalten wird;
wobei die von jedem Strahl in das Zielvolumen eingetragene Energie kleiner als eine Sinterschwellenenergie des Materials ist, und die Summe der von jedem Strahl in das Zielvolumen eingetragenen Energie größer oder gleich einer Verarbeitungsschwellenenergie ist, wobei die Verarbeitungsschwellenenergie der Sinterschwellenenergie des Materials entspricht, wenn das Material selektiv im Zielvolumen gesintert werden soll, oder der Schmelzschwellenenergie des Materials, wenn das Material selektiv im Zielvolumen geschmolzen werden soll,
und wobei das Material des Werkstücks für die mindestens zwei Strahlen teilweise transparent ist.

2. Verfahren nach Anspruch 1, wobei in Schritt b) mehrere Zielvolumina definiert werden und die Zielvolumina in Schritt c) gleichzeitig bestrahlt werden.

3. Verfahren nach Anspruch 1, wobei in Schritt b) mehrere Zielvolumina definiert werden und die Zielvolumina in Schritt c) nacheinander bestrahlt werden.

4. Verfahren nach Anspruch 1, wobei Schritt b) darin besteht, ein einziges Zielvolumen (4) im Inneren des Werkstücks zu definieren, das den gesamten Fehler (10) enthält.

5. Verfahren nach einem der Ansprüche 1 bis 4, ferner umfassend, nach Schritt c), einen Schritt des Kontrollierens des behandelten Bereichs, um zu überprüfen, ob der ursprüngliche Fehler verschwunden ist, wobei der Schritt des Kontrollierens das Detektieren eines möglichen neuen internen Fehlers umfasst und, falls ein neuer interner Fehler in dem Bereich detektiert wird, dieser neue interne Fehler lokalisiert wird und die Schritte b) und c) wiederholt werden.

6. Verfahren nach einem der Ansprüche 1 bis 5, wobei das Detektieren eines inneren Fehlers durch eine nicht destruktive Technik umgesetzt wird.

7. Verfahren nach einem der Ansprüche 1 bis 6, wobei in Schritt c) die mindestens zwei Strahlen im Zielvolumen fokussiert werden.

8. Verfahren nach Anspruch 7, wobei die mindestens zwei Strahlen in ihrem Fokuspunkt zusammenlaufen.

9. Verfahren nach einem der Ansprüche 1 bis 8, wobei in Schritt c) die mindestens zwei Strahlen die gleiche Oberflächenenergie aufweisen.

10. Verfahren nach einem der Ansprüche 1 bis 9, wobei die mindestens zwei Strahlen drei sind.

11. Verfahren nach einem der Ansprüche 1 bis 10, wobei die mindestens zwei Strahlen energetische Strahlen der gleichen Art und aus Laserstrahlen, Mikrowellenstrahlen, UV-Strahlen und IR-Strahlen ausgewählt sind.

12. Verfahren nach einem der Ansprüche 1 bis 11, wobei die größte Abmessung jedes Zielvolumens zwischen 10 µm und 1 mm beträgt.

## Claims

1. Method for treating an internal defect (10) in a part (1) made of a material, the method comprising the steps of:
a) detecting and locating the internal defect (10) in the part;
b) defining, inside the part, at least one target volume (4; 4') which at least partially includes the defect;
**characterised in that**:
c) for each target volume (4; 4'), simultaneously irradiating the target volume by at least two beams (2) which converge in the target volume and are continuous, whereby a treated area is obtained;
wherein the energy applied to the target volume by each beam is less than a threshold energy for sintering the material, and the sum of the energies applied to the target volume by each one of the beams is greater than or equal to a transformation threshold energy, the transformation threshold energy corresponding to the threshold energy for sintering the material, when it is desired to obtain a selective sintering of the material in the target volume, or to the threshold energy for melting the material, when it is desired to obtain a selective melting of the material in the target volume,
and wherein the material of the part is partially transparent to said at least two beams.

2. Method according to claim 1, wherein step b) defining several target volumes, the target volumes are simultaneously irradiated in step c).

3. Method according to claim 1, wherein step b) defining several target volumes, the target volumes are successively irradiated in step c).

4. Method according to claim 1, wherein step b) consists of a definition of a unique target volume (4), inside the part, entirely including the defect (10).

5. Method according to any of claims 1 to 4, further comprising, after step c), a step of controlling the treated area in such a way as to check if the initial defect has disappeared, the step of controlling comprising a detection of any new internal defect and, in the case where a new internal defect is detected in the treated area, this new internal defect is located and steps b) and c) are repeated.

6. Method according to any of claims 1 to 5, wherein the detecting of an internal defect is carried out by a non-destructive technique.

7. Method according to any of claims 1 to 6, wherein, in step c), the at least two beams are focussed in the target volume.

8. Method according to claim 7, wherein the at least two beams converge at their focussing point.

9. Method according to any of claims 1 to 8, wherein, in step c), the at least two beams have the same surface energy.

10. Method according to any of claims 1 to 9, wherein the at least two beams number three.

11. Method according to any of claims 1 to 10, wherein the at least two beams are energy beams of the same nature and are chosen from laser beams, microwave beams, UV beams and IR beams.

12. Method according to any of claims 1 to 11, wherein each target volume has its largest dimension which is comprised between 10 µm and 1 mm.
